Europäisches Patentamt

(19) European Patent Office

Office européen des brevets

(11) **EP 0 840 104 A1**

(12) **EUROPEAN PATENT APPLICATION**
published in accordance with Art. 158(3) EPC

(43) Date of publication:
06.05.1998 Bulletin 1998/19

(51) Int. Cl.⁶: **G01N 11/08**, G01N 15/08

(21) Application number: 96900743.4

(86) International application number:
PCT/RU96/00008

(22) Date of filing: 11.01.1996

(87) International publication number:
WO 96/21854 (18.07.1996 Gazette 1996/33)

(84) Designated Contracting States:
**AT DE FR GB IT NL**

(30) Priority: 12.01.1995 RU 95100572
12.01.1995 RU 95100575

(71) Applicants:
• **Belonenko, Vladimir Nikolaevich**
**Moskovskaya obl., 142717 (RU)**
• **Bunau, Evgeny Karlovich**
**Moscow, 109172 (RU)**
• **Nikolashev, Viyacheslav Grigorievich**
**Moscow, 111395 (RU)**

(72) Inventors:
• **Belonenko, Vladimir Nikolaevich**
**Moskovskaya obl., 142717 (RU)**
• **Bunau, Evgeny Karlovich**
**Moscow, 109172 (RU)**
• **Nikolashev, Viyacheslav Grigorievich**
**Moscow, 111395 (RU)**

(74) Representative:
**Rambelli, Paolo et al**
**c/o JACOBACCI & PERANI S.p.A.**
**Corso Regio Parco, 27**
**10152 Torino (IT)**

(54) **DEVICES FOR MEASURING VISCOSITY AND FOR INVESTIGATING FLUID FLOW THROUGH CAPILLARY-POROUS MEDIUMS**

(57)     The devices comprise two hydraulic cylinders (1,2), communicating through a capillary (3) or a casing (3) filled with a porous medium. Each of the hydraulic cylinders (1,2) is formed of a piston (4,5) mounted within a casing (6,7) so as to provide a translational motion of the piston (4,5) by a drive. Each of the hydraulic cylinders (1,2) has a pressure sensor (8,9). The apparatuses further comprise displacement sensors (10,11) and a common base (12) to secure the hydraulic cylinders (1,2). A drive of the piston (4,5) is adapted to provide a rotational motion of the piston (4,5) by a screw (13,15)-and-nut (14,16) pair. The screw (13,15) of the pair is connected by one end to the piston (4,5) and by another end to the motor (17,18). The casing (6,7) is connected to the nut (14,16) via a resilient member (19,20). The pressure sensor (8,9) is formed as a connection of a displacement indicator with the nut (14,16) and the casing (6,7), and the displacement sensor (10,11) is formed as a connection of a displacement indicator with the piston (4,5) and the casing (6,7) of the hydraulic cylinder (1,2).

FIG.1

EP 0 840 104 A1

# Description

## Field of the Invention

The present invention relates to apparatuses for measuring viscosity and simulating processes of fluid filtration through capillary porous bodies, for defining their filtration characteristics and rheological properties of fluids under pressures varying in a wide range from a normal pressure to a high one, for example, up to 3500 bar and higher. The invention can be utilized in geology, mining and oil and gas industry and in any other fields where it is required to define rheological properties of fluids and porous media, investigate processes of fluid or gas flow through capillaries and various porous materials. It can be also used to measure permeability of samples of porous media.

## Description of the Prior Art

Currently, a number of apparatuses for measuring viscosity and testing fluid flows through capillary porous media under a wide range of pressures is limited.

Known in the art is a viscosimeter comprising a capillary and differential pressure sensing means mounted at the capillary ends, "Measurements in Industry" Reference Book, P.Profos, Moscow, Metallurgy Publishers, 1980, p.397.

The apparatus comprises a metering pump for maintaining a constant flow rate and a differential pressure gauge for measuring pressure differential. An accuracy of measuring viscosity by said apparatus is limited due to errors in measurements and flow velocity control. Additionally, an accuracy of viscosity measurements is reduced due to presence of outlet tubes affecting distribution of pressures and velocities in a main tube.

From SU,A,1420469 known is an device for measuring viscosity, comprising two hydraulic cylinders communicating through a capillary, each of the hydraulic cylinders being formed of a piston mounted within a casing so as to provide a translational motion of the piston by a drive, wherein each of the hydraulic cylinders has a pressure sensor.

The apparatus operates in one direction and has an idle run to prepare it for repeat tests. Under the idle run, a process liquid is fed via a valve system from a high pressure pump into an under-piston cavity of a hydraulic cylinder of an intake plunger, the under-piston cavity of the hydraulic cylinder of a pressure plunger being in a communication with a discharge tank. Next, the tested fluid is bypassed through a check valve of a drum from the intake over-plunger cavity to a pressure cavity.

A volume flow rate measured by velocity sensors depends on throttling properties of the capillary and the tested fluid and on the characteristics of a throttle valve of a piping discharge, which reduces accuracy of measurements and efficiency of a counterpressure discharge. At the same time, the idle run of the apparatus extends the test time and prevents a reversal of the tested fluid through the capillary, making tests at different transient conditions impracticable.

SU,A,1298367 discloses an device for testing fluid flows through capillary porous media, comprising a casing to accomodate a porous medium, the casing being formed with passages for feeding a fluid therein.

In the device above the fluid supply and discharge is perfomed through unions mounted at the opposite faces of the casing. Generally, the device is designed to measure an elastic wave velocity and electrical resistance and fails to comprise high pressure generating means and to reverse the tested fluid through the capillary porous media.

## Summary of the Invention

The object of the present invention is to provide an device for measuring viscosity and testing fluid flows through capillary porous media, wherein a system of hydraulic cylinders allow to measure viscosity, filtration, physical properties of fluids and materials under a wide range of pressures at a reverse mode according to a desired principle with low measurement errors, and, therefore, to provide a variety of measurement conditions at improved accuracy and information content; the system of hydraulic cylinders further provides a possibility to change the tested fluid composition and to test the rheological properties thereof in a flow through porous materials, and, hence, to increase a number of test conditions at improved accuracy and information content.

The object of the invention is attained by an device for measuring viscosity, comprising two hydraulic cylinders communicating through a capillary, each of the cylinders being formed of a piston arranged within a casing so as to provide a translational motion of the piston by a drive and each of the hydraulic cylinders having a pressure sensor, wherein according to the invention there are further Provided displacement sensors for each of the hydraulic cylinders and a common base to secure the casings of the hydraulic cylinders, a piston drive of each of said cylinders is adapted to provide a rotational motion of the piston by a screw-and-nut pair, the screw of the pair being connected by one end to the piston and by another end to a motor, the casing of each of the hydraulic cylinders is connected to the nut via a resilient member, the pressure sensor being formed as a connection of a displacement indicator with the nut and the casing of the hydraulic cylinder, and the displacement sensor being formed as a connection of a displacement indicator with the piston and casing of the hydraulic cylinder.

Alternatively, the device according to the invention further comprises a third hydraulic cylinder communicating with the capillary between two said hydraulic cylinders, a casing of the third hydraulic cylinder being secured to the common base, and a drive is adapted to provide translational and rotational motion of the piston by a screw-and-nut pair, the screw of said pair being connected by one end to the piston and by another end to the motor, the casing of the third hydraulic cylinder is connected to the nut via a resilient member, the pressure sensor is formed as a connection of a displacement indicator to the nut and the casing of the hydraulic cylinder, and a displacement sensor is formed as a connection of the displacement indicator to the piston and casing of the third hydraulic cylinder.

The object of the invention is further attained by an device for investigation fluid flows through capillary porous media, comprising a casing to accomodate a porous medium, said casing being formed with passages for feeding a fluid into the casing, wherein according to the invention there are further provided two hydraulic cylinders, a pressure sensor and a displacement sensor for each of the hydraulic cylinders, and a common base, each of said hydraulic cylinders being connected to one of the passages for feeding fluid, respectively, and the casings of the hydraulic cylinders are secured to the common base, a piston drive of each of the hydraulic cylinders is adapted to provide a translational and rotational motion of the piston by a screw-and-nut pair, the screw of said pair being connected by one end to the piston and by another end to the motor, the casing of the hydraulic cylinder is connected to the nut via a resilient member, the pressure sensor being formed as a connection of a displacement indicator with the nut and the casing of the hydraulic cylinder, and the displacement sensor being formed as a connection of a displacement indicator with the piston and casing of the hydraulic cylinder .

Alternatively, the object of the invention is attained by an device for investigation fluid flows through capillary porous media, further comprising a third hydraulic cylinder communicating with a passage for feeding a fluid between two said hydraulic cylinders, a casing of the third hydraulic cylinder being secured to said common base, and a drive is adapted to provide a translational and rotational motion of the piston by a screw-and-nut pair, the screw of the pair being connected by one end to the piston and by another end to the motor, the casing of the third hydraulic cylinder is connected to the nut via a resilient member, the pressure sensor is formed as a connection of a displacement indicator to the nut and the casing of the hydraulic cylinder, and the displacement sensor is formed as a connection of the displacement indicator to the piston and casing of the third hydraulic cylinder .

The described arrangement of the system of hydraulic cylinders allows to measure viscosity factors of Newtonian fluids with high accuracy within a wide range of pressures, as well as rheological characteristics of viscoelastic, viscoplastic or other fluids at continuously and independently variable pressure and flow rates of the medium, providing repeated test cycles for the same sample at similar or varying conditions. The present invention allows to define the effect on the fluid rheological characteristics of metered additives of other substances, such as oil additives, surface-active substances, etc. which can be introduced at predetermined pressures and mixing rates, and to define rheological filtration and PTV properties of fluids at predetermined pressures and pressure differentials, for instance, in order to examine filtration of oils or some components by filters, to define filtration abilities of bed fluids and rock samples and an effect of various additives, variation of pressure, temperature and other parameters on filtration processes. A provision of three hydraulic cylinders allows to simulate more reliably processes occuring in hydrocarbon-bearing formations during their exploration, for instance, at flooding or maintaining a bed pressure, for example, by injection water or carbon dioxide, or injection of various displacing agents and solvents, polymers, surface active substances, and hydraulic fracturing of formation, etc.

The above and other advantages and features of the present invention will be more clearly understood from the following detailed description of the best embodiments of the invention taken in conjunction with the accompanying drawings.

Brief Description of the Drawings

Figure 1 is a general view of an device according to the present invention;
Figure 2 is view showing a qualitative relation between the fluid pressure and volume in the first hydraulic cylinder;
Figure 3 is the same as Figure 2, for the second hydraulic cylinder;
Figure 4 is a view showing a relation between the fluid pressure and volume at motions of the piston under a high fluid pressure and flow rate and low hydrostatic pressure in the first hydraulic cylinder;
Figure 5 is the same as Figure 4, for the second hydraulic cylinder;
Figure 6 is a view showing a qualitative relation between the fluid pressure and volume at motions of the piston under a low pressure and flow rate and high hydrostatic pressure in the first hydraulic cylinder;
Figure 7 is the same as Figure 6, for the second hydraulic cylinder;
Figure 8 is the same as Figure 1, further including a third hydraulic cylinder;
Figure 9 is a view of a casing with a capillary porous medium, for example, a rock sample, such as a core.

Description of the Preferred Embodiments

An device for investigating fluid flows through capillary porous media differs over an apparatus for measuring viscosity by replacing a capillary for a casing to accomodate a porous medium, the remaining components of the apparatuses being the same.

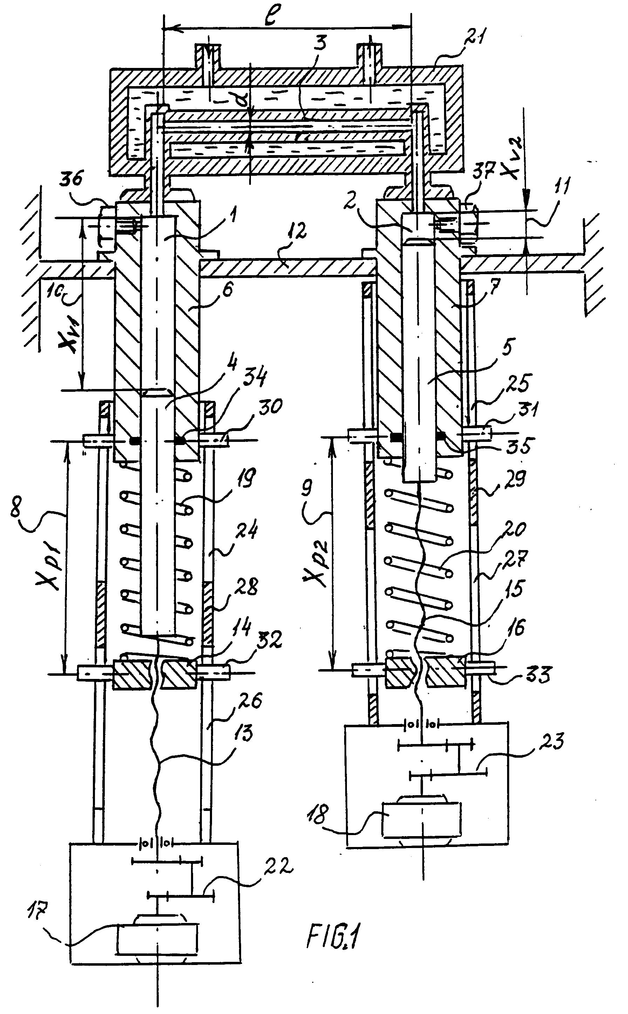

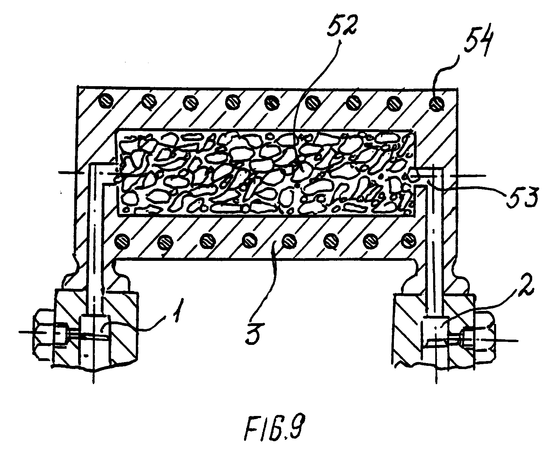

The devices according to the present invention (Fig.1) comprise two hydraulic cylinders 1,2 communicating through a capillary 3 or a casing 3 to accomodate a porous medium (Fig.9). The hydraulic cylinders 1,2 include pistons 4,5 arranged within casings 6,7 of the hydraulic cylinders 1,2, respectively. Each of the hydraulic cylinders 1,2 comprises a pressure sensor 8,9, respectively, shown in Fig.1 by arrows $X_{p1}$ and $X_{p2}$, and a displacement sensor 10,11, shown in Fig.1 by arrows $X_{v1}$ and $X_{v2}$, respectively, which are formed as indicators of displacement (linear).

The hydraulic cylinders 1,2 can be high-pressure hydraulic cylinders (up to 3500 bar and higher). Their casings 6,7 are secured to a common base 12 (Fig.1). A drive of the piston 4 of the hydraulic cylinder 1 provides a translational and rotational motion of the piston 4 by a screw 13-and-nut 14 pair, and a drive of the piston 5 does the same for the piston 5 by a screw 15-and-nut 16 pair. The screw 13 is connected to the piston 4 and a motor 17, whereas the screw 15 is connected to the piston 5 and a motor 18. The casings 6,7 of the hydraulic cylinders 1,2 are connected to the nuts 14,16 via resilient members 19,20, respectively, disposed between a face of the casing 6 and the nut 14, and between a face of the casing 7 and the nut 16, respectively. The pressure sensors 8,9 of each of the hydraulic cylinders 1,2 are formed as similar indicators (not shown in Figure 1) adapted to detect a mutual displacement between the nut 14 and the casing 6 and the nut 16 and the casing 7, respectively. The displacement sensors 10,11 are separate for each of the hydraulic cylinders 1,2 having a form of the same indicators (not shown in Fig.1) detecting mutual displacements between the piston 4 and the casing 6 and the piston 5 and the casing 7, respectively.

In Fig.1 also shown are a thermostat 21, reduction gears 22,23 of the motors 17,18; guides 24,25 for casings 6,7 of the hydraulic cylinders 1,2; guides 26,27 for the nuts 14,16, arranged within the housings 28,29 of the drives; stops 30,31 and 32,33; seals 34,35; plugs 36,37 of inlet openings in the casings 6,7 of the hydraulic cylinders 1,2, respectively.

The displacement indicator can be any known in the art indicator providing an acceptable accuracy, such as MT12 or MT60 linear displacement sensor with an electric output, manufactured by NEIDENHAIM,DE. The pressure sensors 8,9 transduce linear displacements $X_{p1}$ and $X_{p2}$ of the resilient members 19,20 into electric signal proportional to the pressure of the tested fluid in the hydraulic cylinders 1,2, respectively. The displacement sensors 10,11 tranduce linear displacements of the pistons 4,5 with respect to the casings 6,7 of the hydraulic cylinders 1,2, i.e. dimensions $X_{v1}$, $X_{v2}$, into electric signal proportional to volumes $V_{p1}$ and $V_{p2}$ of the fluids contained in the hydraulic cylinders 1,2, respectively.

The devices for measuring viscosity and investigating fluid flows through capillary porous media (Fig. 1) operate as follows.

Through openings provided with plugs 36,37, a fluid is introduced into cavities of the hydraulic cylinders 1,2 and a capillary 3 (or a casing 3 for porous medium). A piston of one of the hydraulic cylinders, for instance, the piston 4, is set at its extreme position so that a volume of the fluid tested in its hydraulic cylinder is at maximum, and the piston 5 of the hydraulic cylinder 2 is set at the other extreme position so that the volume of the fluid tested in the hydraulic cylinder 2 is at minimum. Next, a drive of the piston 4 of the hydraulic cylinder 1 is actuated. Through a reduction gear 22, the motor 17 rotates a screw 13 and the piston 4 connected thereto, which performs a translational and rotational motion with respect to a stationary casing 6 of the hydraulic cylinder 1. The rotational component of the piston 4 eliminates a rest friction and reduces a sliding friction between the seal 34 and the piston 4 during its translational motion with respect to the seal 34.

Owing to stops 32 sliding along the grooves in the guides 26 of the housing 28 of the drive, the nut 14 does not rotate, providing a translational and rotational motion of the screw 13 with the piston 4 and translational motion of the housing 28 of the drive, for instance, upwards with respect to the stationary casing 6 of the hydraulic cylinder 1 in the case it is mounted upright (Fig.1). Motion of the piston 4 with respect to the casing 6 causes resistance forces including those applied to a face of the piston 4 along its axis. These forces are caused by a static pressure of the fluid under its compression in the hydraulic cylinder 1 or under its pressure flow through the capillary 3 (or the casing 3 for porous medium), or by both factors simultaneously. Said forces are balanced by deformation of the resilient member 19. In this case, elongation of the resilient member 19, expressed as a change of the dimension $X_{p1}$, is detected by the pressure sensor 8, the electrical signal thereof being in proportion to the current pressure value P1 in the hydraulic cylinder 1. The linear displacement of the piston 4 with respect to the casing 6 of the hydraulic cylinder 1, expressed as a change of the dimension $X_{v1}$, is detected by the displacement sensor 10, the electrical signal thereof being in proportion to the current value $V_1$ of the fluid volume not forced out yet from the cavity of the hydraulic cylinder 1. Upon reaching a predetermined fluid hydrostatic pressure P, the drive of the piston 4 is cut by de-energizing the motor 17. The new value of the volume $V_{p1}$ of the tested fluid in the hydraulic cylinder 1, reduced due to the fluid compressibility and a deformation of the resilient member 20, when the pressures in the cavities of the hydraulic cylinders 1,2 are balanced, will be detected as an appropriate electric signal of $X_{v1}$ from the displacement sensor 10. A new value of the volume $V_{p2}$ of the fluid in the hydraulic cylinder 2 is also detected in the same way. Next, the drives of the pistons 4,5 are started simultaneously. The piston 4 moves to reduce the fluid volume in the hydraulic cylinder 1, whereas the piston 3 moves to increase the fluid volume in the hydraulic cylinder 2. Meanwhile, the hydraulic cylinders 1,2 remain stationary, the housing of the drive of the piston 4 lifts, and the housing 29 of the drive of the piston 5 lowers.

A principle of controlling motions of the pistons 4,5 can be arbitrarily chosen, including, for instance, the principle of maintaining a constant volume $V_p$ of the fluid, reached at the initial compression of the fluid up to pressure P. At such control principle, the tested fluid, having a known volume $V_p$ under a predetermined hydrostatic pressure P, is enforced to flow through the capillary 3 (casing 3) having a length l and diameter d at the predetermined controlled flow rate Q which is in proportion to the motion velocity $dX_{v1}/dt = dX_{v2}/dt$ of the pistons 4,5. In the case a viscous fluid, for example, a liquid, flows through the capillary 3 under a pressure provided by motions of the pistons 4,5, a pressure $P_1$, exceeding the initial hydrostatic pressure P, is developed in the hydraulic cylinder 1, and a pressure $P_2$, which is less than the initial hydrostatic pressure P, is developed in the hydraulic cylinder 2. This will entail a change of elastic balanced position of the resilient members 19,20, respectively, a variation of the dimensions $X_{p1}$ and $X_{p2}$ of the resilient members 19 and 20, which, in turn, will cause a variation of electric signals from the respective pressure sensors 8,9 in proportion to the actual pressure values in the hydraulic cylinders 1,2. When one of the pistons, for example, the piston 4, reaches the extreme position corresponding to the most complete fluid flow through the capillary 3 from the hydraulic cylinder 1 to the hydraulic cylinder 2, the drives of the pistons 4,5 stop simultaneously, and one cycle of the apparatus operation terminates. If necessary, depending on the test purpose, the second cycle can be accomplished in an entirely similar way at the simultaneous reversal of the drives of the hydraulic cylinders 1,2. Such cyclic simultaneous motion of the pistons 4,5 can be repeated many times as the runs for different temperatures and static pressures. For each of the hydraulic cylinders 1,2, the complete process of rheological tests can be fixed, namely: setting a required hydrostatic pressure; transient processes relating to the beginning of the pistons 4,5 movement and their stop, and a steady process of the fluid pressure flow.

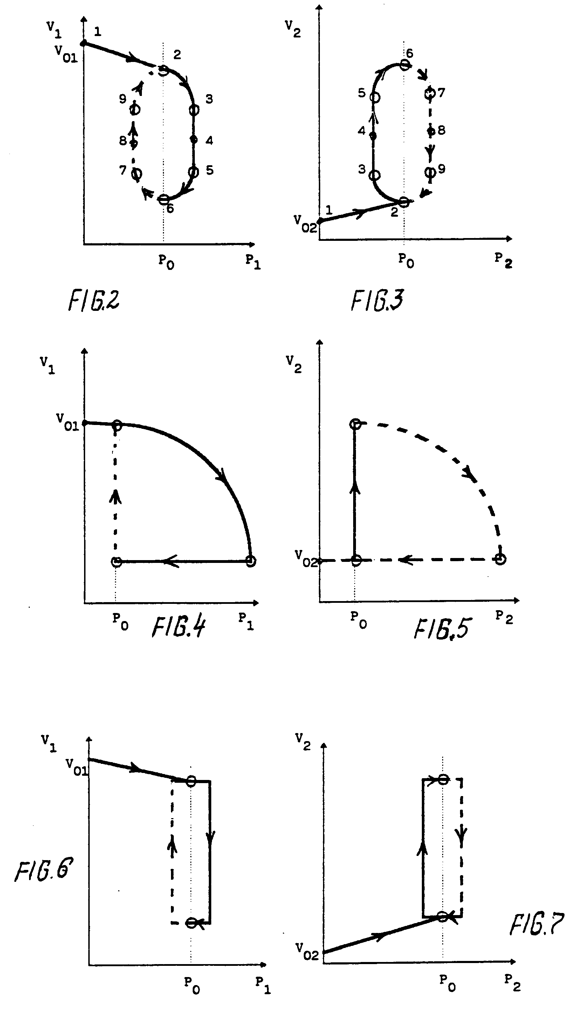

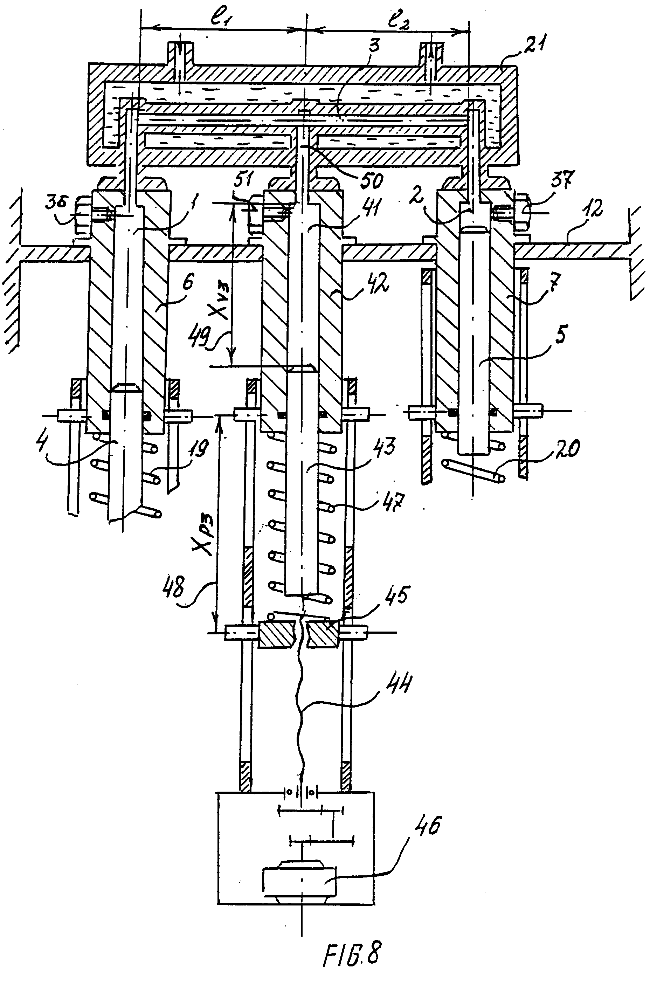

Figures 2,3 present a more detailed qualitative picture of changing parameters P and V in each of the hydraulic cylinders 1,2, respectively, at an example of the first (solid line) and second (dotted line) operation cycles.

The indications in Figures 2,3 are as follows: $V_{01}$ and $V_{02}$ are the initial values of the fluid volume in the hydraulic cylinders 1,2, respectively, after filling; section 1-2 is an increase of the hydrostatic pressure up to $P_0$; section 2-3 is a transient process relating to the beginning of the simultaneous movement of the pistons 4,5; section 3-5 is a zone of steady pressures $P_1$ and $P_2$ at a simultaneous movement of pistons 4,5 with a constant velocity $X_{v1} = X_{v2}$ and, hence, at a constant flow rate; sections 4,8 are regions of the most accurate measurements of the viscosity ratio of the Newtonian fluids; section 5-6 is a transient process relating to a simultaneous stop of the pistons 4,5; section 6-7 is a transient process relating to a simultaneous reversal of the pistons 4,5; section 7-9 is a zone of the steady values of pressures $P_1$ and $P_2$ at a simultaneous motion of the pistons 4,5 during their back stroke; section 9-2 is a transient process relating to a simultaneous stop of the pistons 4,5.

The test results, for example, of Newtonian fluids, allow to calculate the dynamic (shear) viscosity ratio, using the Poiseuille's formula. The same formula can be used to define efficient viscosity ratios for different nonliner flow laws.

To control the simultaneous motion of the pistons 4,5, different principles can be chosen. For instance, the motions can be performed under a high fluid pressure and flow rate in the capillary 3 (casing 3) and a low hydrostatic pressure $P_0$ (Figs.4,5), or the motions can be performed under a low pressure and flow rate and high hydrostatic pressure $P_0$ (Figs.6,7).

The devices according to the present invention can operate asynchronously, i.e. to perform motions at different velocities and phases so that during one cycle both the static pressure, flow rate and pressure differentials at the capillary 3 will be variable.

Therefore, the devices according to the present invention allow to increase a variety of measurement conditions at improved accuracy and information content insofar as a number of cycles carried out according to different principles is unlimited, and in the test process one can define statistical mean errors introduced during operation by each of the hydraulic cylinders 1,2 in combination with each other, at the same or variable conditions.

Alternatively, an device according to the present invention can comprise a third hydraulic cylinder 41 (Fig.8) communicating with the capillary 3 (casing 3) between the two hydraulic cylinders 1,2 at fixed distance from the ends of the capillary 3 (places of connection of the hydraulic cylinders 1,2). A casing 42 of the third hydraulic cylinder 41 is secured to the common base 12. A drive of a piston 43 is adapted to provide a translational and rotational motion of the piston 43 by a screw 44-and-nut 45 pair connected by the screw 44 to the piston 43 and a motor 46. The casing 42 of the third hydraulic cylinder 41 is connected to the nut 45 via a resilient member 47 disposed between a face of the casing 42 and the nut 45, a pressure sensor 48 being formed as an indicator detecting the mutual displacement between the nut 45 and the casing 42, and the displacement sensor 49 being formed as an indicator detecting a mutual displacement of the piston 43 and casing 42. Thus, the third hydraulic cylinder with a drive is identical to the first and second hydraulic cylinders 1,2 with the drives thereof.

Figure 8 shows also a pipe 50 (or a passage 50 for feeding fluid into the casing 3) connecting the third hydraulic cylinder 41 with the capillary 3 and a plug 51 to introduce a fluid.

Lengths $l_1$ and $l_2$ are fixed and can be, for example, equal, as shown in Fig.8.

There are several alternative methods of operation of the apparatuses with three hydraulic cylinders 1,2,41.

In the first alternative method, a fluid to be tested is introduced through the openings provided with plugs 36,37,51 into the cavities of the hydraulic cylinders 1,2 and 41 and the capillary 3 (casing 3). At this moment, the piston 4 is set to its extreme position so that the fluid volume in the hydraulic cylinder 1 is at maximum, and the piston 5 is set to the other extreme position so that the volume of the tested fluid in the hydraulic cylinder 2 is at minimum, the piston 43 occupying the extreme position in the hydraulic cylinder 41 corresponding to its maximum volume. Next, the drives of the hydraulic cylinders 1,2 are started simultaneously. The piston 4 moves to reduce the fluid volume in the hydraulic cylinder 1, whereas the piston 5 moves simultaneously with the piston 4 to increase the fluid volume in the hydraulic cylinder 2. When one of said pistons reaches the extreme position corresponding to the most complete flow of the fluid from the hydraulic cylinder 1 to the hydraulic cylinder 2, the drives of the hydraulic cylinders 1,2 are simultaneously reversed and pistons 4,5 move until they take their initial positions. Such a cyclic motion is repeated many times. Under this cyclic motion, the rheological characteristics of the tested fluid are defined at zero static pressure. When a number of operation cycles of the hydraulic cylinders 1,2 reaches a value providing the required measurement accuracy, a drive of the hydraulic cylinder 41 is started without an interruption of the cyclic motions of the pistons 4,5, and the piston 43, moving within the casing 42 of the hydraulic cylinder 41, compresses the tested fluid and increases the static pressure thereof. Upon reaching the required static pressure, the drive of the hydraulic cylinder 41 starts to perform relatively high-frequency vibrations of the piston 43 causing an appearance of a high-frequency component (pulsations) of the general static pressure of the tested fluid. A principle of controlling motions of the piston can be arbitrarily chosen, for example, harmonic, saw-tooth, etc.

In the second alternative method, the tested fluid is introduced similarly to the first alternative method. The pistons 4,43 are set to their extreme positions corresponding to the maximum volume of the fluid in the hydraulic cylinders 1,41, and the piston 5 is set to the opposite extreme position corresponding to the minimum volume of the fluid tested. Next, the drives of the two hydraulic cylinders 1,41 are started and their pistons 4,43 compress the tested fluid and increase its hydrostatic pressure up to a predetermined level, whereupon both drives are cut. Further, the drives of all three hydraulic cylinders 1,2,41 are actuated simultaneously, the pistons 4,43 moving to reduce the fluid volume in the hydraulic cylinders 1,41, and the piston 5 moving to increase the fluid volume. The motion of the pistons 4,5,43 is controlled so that, for example, a motion velocity of the piston 5 is equal to a sum of the velocities of the pistons 4,43 travel. In the capillary 3 (casing 3), at section 11 between the hydraulic cylinders 1,41, a pressure flow of the tested fluid is provided at a nominal flow rate, whereas at section 13 between the hydraulic cylinders 41,2 the flow rate is increased twice. As a variant of the second alternative method of the apparatus operation, the motion of the pistons 4,5,43 can be controlled so that the pistons 4,5 move in coordination to reduce the fluid volume in their hydraulic cylinders 1,2, and the piston 43 moves to increase the fluid volume in the hydraulic cylinder 41 at a velocity equal to a sum of the velocities of the pistons 4,5 of the hydraulic cylinders 1,2. The desired parameters, such as shear and bulk viscosity, compressibility and modulus of elasticity, relaxation periods, etc., are defined by conventional formulas.

In the third alternative method, a supplementary subtance, such as an additive, which effect on the rheological characteristics of the basic tested fluid should be defined, is introduced into a cavity of the hydraulic cylinder 41 through an opening provided with a plug 51. The basic fluid is introduced into the cavities of the hydraulic cylinders 1,2, capillary 3 and pipe 50. The pistons 4,43 are set to the extreme positions corresponding to a maximum volume of the tested fluid in the hydraulic cylinders 1,41, and the piston 5 is set to the position corresponding to a minimum fluid volume in the hydraulic cylinder 2, Next, the drive of the hydraulic cylinder 1 is started, the piston 43 compresses the basic fluid and the supplementary substance, increasing the hydrostatic pressure up to a predetermined level. Thereafter, the drive of the hydraulic cylinder 1 is cut. Further, the drives of the hydraulic cylinders 1,2 are started simultaneously. The piston 4 moves to reduce the volume of the basic fluid, meanwhile, the piston 5 moves to increase the volume of the basic fluid. At the pressure flow of the basic fluid through the capillary 3, the fluid does not mix with the supplementary fluid (an additive) since the pipe 50 is filled with a stationary additive-free basic fluid. Next, the pistons 4,5 function in a cyclic mode similar to the operation of the apparatus having two hydraulic cylinders 1,2. Upon completing the series of cycles sufficient to define the rheological characteristics of the basic fluid, the drives of the hydraulic cylinders 1,2 are started, and the pistons 4,5 are left in the center position. Next, the drives of all three hydraulic cylinders 1,41,2 are started simultaneously. The pistons 4,5 move to increase the volume of the basic fluid in the hydraulic cylinders 1,2, whereas the piston 43 moves to reduce the volume of the supplementary substance (an additive). The velocity of the piston 43 travel is equal to a sum of the velocities of the pistons 4,5. A predetermined portion of the second supplementary substance (an additive) is forced out through the branch pipe 50 to a middle length part of the capillary 3, replacing the basic liquid. Next, the drives of the hydraulic cylinders 1,2 are started, the pistons 4,5 move in a cyclic mode similarly to the previous series of cycles. The fluid and the supplementary substance mix intensively, and in the case they are mutually soluble liquids, the fluid and the supplementary substance dissolve. Such series of cycles can be terminated, for example, after the complete mixing (solution) of the tested substances, which is defined by a progressive stabilization of the rheological characteristics of the mixture from one cycle to another. When the drives of the hydraulic cylinders 1,2 have stopped, a new portion of the supplementary substance can be fed into the basic fluid/supplementary substance mixture by starting the hydraulic cylinder 41, and a series of cycles above can be repeated.

Fig.9 illustrates a casing 3 to accomodate a porous medium 52 therein. The casing 3 is formed with passages 53 for feeding the fluid. The casing 3 can comprise a heating means 54. This modification of the apparatus allows to define the filtration, rheological and other characteristics of fluids and porous materials.

Particularly, a porous material can be a rock taken from a well in a definite deposit, the fluid being a drilling liquid, oil and gas condensate system or stratum water. The casing 3 can be connected to two hydraulic cylinders 1,2 or to three hydraulic cylinders 1,2,41, and the apparatus for testing fluid flows through capillary porous media operates in accordance with the alternative methods above. In this case, viscosity ratios are defined from Darcy's or, for example, Brinkman's formulas. Their values should not always coincide with viscosity values defined by an apparatus having a single capillary, and it is more appropriate to call them efficient viscosity ratios.

Permeability of a rock sample (core) is also defined by the conventional formulas.

The examples above do not limit the application of the devices according to the present inventions, and those skilled in the art will appreciate that various modifications of the devices for investigating fluid flows through capillaries and capillary porous media are possible, without departing from the scope and spirit of the invention.

Industrial Applicability

The devices according to the present invention can be utilized in chemical, petrochemical, mining, gas and oil industries, and in other fields where it is necessary to investigate liquid or gas flows through capillaries or capillary porous media.

**Claims**

1. An device for measuring viscosity, comprising two hydraulic cylinders (1,2) communicating through a capillary (3), each of the hydraulic cylinders (1,2) being formed of a piston (4,5) mounted within a casing (6,7) so as to provide a translational motion of the piston (4,5) by a drive and each of the hydraulic cylinders (1,2) including a pressure sensor (8,9), the apparatus characterized in that it further comprises displacement sensors (10,11) for each of the hydraulic cylinders (1,2), and a common base (12) to secure the casings (6,7) of the hydraulic cylinders (1,2), a drive of the piston (4,5) of each of the hydraulic cylinders (1,2) is adapted to provide a rotational motion of the piston (4,5) by a screw (13,15)-and-nut (14,16) pair, the screw (13,15) of said pair being connected by one end to the piston (4,5) and by another end to a motor (17,18), the casing (6,7) of each of the hydraulic cylinders (1,2) is connected to the nut (14,16) via a resilient member (19,20), the pressure sensor (8,9) being formed as a connection of a displacement indicator with the nut (14,16) and the casing (6,7) of the hydraulic cylinder (1,2), and the displacement sensor (10,11) being formed as a connection of a displacement indicator with the piston (4,5) and the casing (6,7) of the hydraulic cylinder.

2. An device as set forth in claim 1, characterized in that it further comprises a third hydraulic cylinder (41) communicating with the capillary (3) between two said hydraulic cylinders (1,2), a casing (42) of said third hydraulic cylinder (41) is secured to said common base (12), and a drive is adapted to provide a translational and rotational motion of the piston (43) by a screw (44)-and-nut (45) pair, the screw (44) of said pair being connected by one end to the piston (43) and by another end to a motor (46), the casing (42) of the third hydraulic cylinder (41) is connected to the nut (45) via a resilient member (47), a pressure sensor (48) being formed as a connection of a displacement indicator with the nut (45) and the casing (42) of the hydraulic cylinder (41), and a displacement sensor (49) being formed as a connection of a displacement indicator with the piston (43) and the casing (42) of the third hydraulic cylinder (41).

3. An device for investigating fluid flows through capillary porous media, comprising a casing (3) to accomodate a porous medium (52) therein, said casing being formed with passages (53) for feeding a fluid into the casing (3), the apparatus characterized in that it further comprises two hydraulic cylinders (1,2), pressure sensors (8,9) and displacement sensors (10,11) for each of the hydraulic cylinders, and a common base (12), each of said hydraulic cylinders (1,2) communicating with one of the fluid feeding passages (53), respectively, and the casings (6,7) of the hydraulic cylinders (1,2) being secured to the common base (12), a drive of the piston (4,5) of each of the hydraulic cylinders (1,2) is adapted to provide a translational and rotational motion of the piston (4,5) by a screw (13,15)-and-nut (14,16) pair, the screw (13,15) of said pair being connected by one end to the piston (4,5) and by another end to the motor (17,19), the casing (6,7) of the hydraulic cylinder (1,2) is connected with the nut (14,16) via a resilient member (19,20), the pressure sensor (8,9) being formed as a connection of a displacement indicator with the nut (14,16) and the casing (6,7) of the hydraulic cylinder (1,2), and the displacement sensor (10,11) being formed as a connection of a displacement indicator with the piston (4,5) and the casing (6,7) of the hydraulic cylinder (1,2).

4.  An device as set forth in claim 3, characterized in that it further comprises a third hydraulic cylinder (41) communicating with a passage (53) for feeding a fluid, disposed between two said fluid feeding passages (53) communicating with two said hydraulic cylinders (1,2), a casing (42) of the third hydraulic cylinder (41) is secured to said common base (12), and a drive is adapted to provide a translational and rotational motion of the piston (43) by a screw (44)-and-nut(45) pair, the screw (44)of said pair being connected by one end to the piston (43) and by another end to a motor (46), the casing (42) of the third hydraulic cylinder (41) is connected to the nut (45) via a resilient member (47), a pressure sensor (48) being formed as a connection of a displacement indicator with the nut (45) and the casing (42) of the third hydraulic cylinder (41), and a displacement sensor (49) being formed as a connection of a displacement indicator with the piston (43) and the casing (42) of the third hydraulic cylinder (41).

FIG.1

FIG.2

FIG.3

FIG.4

FIG.5

FIG.6

FIG.7

FIG.8

FIG.9

EP 0 840 104 A1

## INTERNATIONAL SEARCH REPORT

| | International application No. |
|---|---|
| | PCT/RU 96/00008 |

**A. CLASSIFICATION OF SUBJECT MATTER**

Int.Cl.6  G01N 11/08,15/08

According to International Patent Classification (IPC) or to both national classification and IPC

**B. FIELDS SEARCHED**

Minimum documentation searched (classification system followed by classification symbols)

Int.Cl.6  G01N 11/00-11/08,15/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU ,A ,170885 (N.S DON et al).23 June 1965 (23.06.65) | 1-2 |
| A | SU ,A ,202579 (KRASNODARSKY FILIAL VSESOJUZNOGO NAUCHNO-ISSLEDOVATELSKOGO I PROEKTNO-KONSTRUKTORSKOGO INSTITUTA KOMPLEKSNOI  AVTOMATIZATSII NEFTYANOI I GAZOVOI PROMYSHLENNOSTI 23 November 1967 (23.11.67) | 1-2 / 1-2 |
| A | SU. A1. 1479851 (DNEPRODZERZHINSKY INDUSTRIALNY INSTITUT) 15 May 1989 (15.05.89) | 1-2 |

☑ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 March 1996 (12.03.96) | 15 March 1996 (15.03.96) |

| Name and mailing address of the ISA/ 　　　　RU | Authorized officer |
|---|---|
| Facsimile No. | Telephone No. |

Form PCT/ISA/210 (second sheet) (July 1992)

13

**INTERNATIONAL SEARCH REPORT**

International application No.

PCT/RU 96/00008

C (Continuation). DOCUMENTS CONSIDERED TO BE RELEVANT

| Category* | Citation of document, with indication, where appropriate, of the relevant passages | Relevant to claim No. |
|---|---|---|
| A | GB. A. 1496414 (CIBA-GEIGY AG) ,30 December 1977 (30.12.77) | 1-2 |
| A | SU. A1. 1420469 (FIZIKO-TEKHNICHESKY INSTITUT SO SPETSIALNYM KONSTRUKTORSKIM BJURO I OPYTNYM PROIZVODSTVOM URALSKOGO NAUCHNOGO TSENTRA AN  SSSR) 30 August 1988 (30.08.88) | 1-2 |
| A | SU. A1. 1803818 (VSESOJUZNY NEFTEGAZOVY NAUCHNO-ISSLEDOVATELSKY INSTITUT)  23 March 1993 (23.03.93) | 3-4 |
| A,P | GB. A. 2280512 (INSTITUT FRANCAIS DU PETROLE). 01 February 1995 (01.02.95) | 3-4 |
| A | GB. A. 2127559 (CORE LABORATORIES INC.,) 11 April 1984 (11.04.84) | 3-4 |
| A | SU. A. 941560 (INSTITUT TEKHNICHESKOI FIZIKI AN USSR), 07 April 1988 (07.04.88) | 3-4 |

Form PCT/ISA/210 (continuation of second sheet) (July 1992)